# EUROPEAN PATENT APPLICATION

(11) **EP 4 407 222 A1**
(43) Date of publication of application: **31.07.2024**
(21) Application number: 24151084.1
(22) Date of filing: 10.01.2024
(51) Int. Cl.: F16L 1/16, E02F 3/92, E02F 5/10, F16L 1/235

(54) **A METHOD FOR BURYING A PIPE IN A SEABED AND A USE THEREOF**

(30) Priority: 27.01.2023 FI 20235076
(71) Applicant: Dyke Engineering Oy, 00211 Helsinki (FI)
(72) Inventor: VALLI, Tuomas, 00211 Helsinki (FI)
(74) Representative: Heinonen & Co

(57) **Abstract**

A method for burying a pipe (104) in a seabed, comprising an arrangement, which comprises at least a pressurized water supply, and at least one nozzle (102) connected to said pressurized water supply, wherein it comprises at least the steps of arranging the pipe to be buried on the seabed, arranging said nozzle on the side of the pipe, ejecting pressurized water into the seabed with the at least one nozzle to increase water content of the seabed below the pipe, so that the density of the seabed locally decreases below the density of the pipe allowing the pipe to supersede the seabed, and ejecting the water until the pipe has descended at the desired depth into the seabed.

## Description

### FIELD OF THE INVENTION

Generally, the present invention relates to a method and a use for burying a pipe in a seabed.

### BACKGROUND

Laying underwater pipes on the bottom of a sea or a lake is in many ways more demanding than laying pipes on the ground. Pipes, which have been sunk on the seabed, are usually anchored on their place.

Instead or in addition to anchoring pipes, pipes can be buried in the seabed. This is usually done by excavating a trench for them. Burying pipes may be a better solution than anchoring them, especially if wanted to avoid the profile of the pipes being higher than the rest of the seabed or when the seabed is uneven, for example. The pipes are laid into the trench and covered with material accumulated in the trench or with other material. That method is generally used when installing pipes on land, but also when installing them in seabed. It is advantageous that the seabed, wherein the trench is made, is an easily excavated material, such as clay or sand.

Unfortunately, this method has some disadvantages. When excavating a trench, the material to be moved mixes with the water, which hinders visibility. There might also be toxic substances at the seabed, which can reduce the quality of the water. Furthermore, it is needed a dredging-excavator that can dig at all water depths along the pipe route, which may be difficult to implement and increase costs.

### SUMMARY OF THE INVENTION

It is an objective of the present invention to implement such a solution, that the previously mentioned drawbacks of the prior art could be diminished. In particular, the invention is implied to solve how to easily bury pipes in a seabed.

The aforesaid objective is achieved according to the present invention as claimed in claim 1.

Accordingly, in one aspect of the present invention, a method for burying a pipe in a seabed comprises an arrangement comprising a pressurized water supply, and at least one nozzle connected to said pressurized water supply, and at least the steps of arranging the pipe to be buried on the seabed, arranging the nozzle on the side of the pipe, ejecting pressurized water into the seabed with at least one nozzle to increase water content of the seabed below the pipe, so that the density of the seabed locally decreases below the density of the pipe allowing the pipe to supersede the seabed, and ejecting the water until the pipe has descended at the desired depth into the seabed.

In an embodiment, the method further comprising a step of moving the nozzle along the pipe for continuing burying the pipe.

In another embodiment, the pressurized water jet is directed in substantially perpendicular to the seabed.

Yet, in an embodiment, the arrangement comprises two nozzles arranged on opposite sides of the pipe.

In another embodiment, the pressurized water supply is a high-pressure pump. The expression "high pressure" in the context of the present application typically means pressures such as 10 bar and over. However, pressures over 20 bar are usually not needed, when burying pipes in shallow water.

In another aspect of the present invention, a use of the method according to the present invention for burying a pipe in a seabed.

In an embodiment, the method is used wherein the seabed is in shallow water.

The utility of the present invention follows from a plurality of factors depending on each particular embodiment. The present invention provides easy, cost-effective and fast way to bury a pipe in a seabed. A pipe can be buried into the seabed without dredging-excavators, and it can be precisely done in the bottom of the sea, which might speed up work and reduce costs.

The arrangement and the method of the present invention are especially suitable for fine seabed materials, such as clay, silt or very fine sand. The method does not work with coarse sand.

In addition, the arrangement and the method are especially suitable for burying pipes in shallow water, where it might be difficult to use powerful high-pressure pumps known from oil rigs. Powerful high-pressure pumps also use such amount of surrounded water that those pumps cannot work in shallow water installation sites, since there is not enough water for them.

Further, by directing the pressurized water jet perpendicularly into the seabed, it might be possible to prevent significant amount of soil releasing from the bottom into the water, which might also help to maintain possible toxic substances in the seabed.

The expressions "seabed" and "sea" are used in this description to refer a water area, wherein a pipe want to be laid, such as a sea, a lake or a river, for example.

The expression "shallow water" refers herein to a seabed, which is in the depth of 10 m, for example.

The expression "a pipe" refers herein to a pipe or pipes connected to form a pipeline, for example.

The expression "a number of" refers herein to any positive integer starting from one (1), e.g. to one, two, or three.

The expression "a plurality of" refers herein to any positive integer starting from two (2), e.g. to two, three, or four.

Different embodiments of the present invention are disclosed in the dependent claims.

### BRIEF DESCRIPTION OF THE RELATED DRAWINGS

Next the invention is described in more detail with reference to the appended drawings in which
Fig. 1 illustrates an embodiment of an arrangement for burying a pipe in a seabed in accordance with the present invention.
Fig. 2 illustrates a pipe buried in the seabed by using the arrangement and the method of the present invention.
Fig. 3 is a flow diagram of an embodiment of a method in accordance with the present invention.

### DETAILED DESCRIPTION OF THE EMBODIMENTS

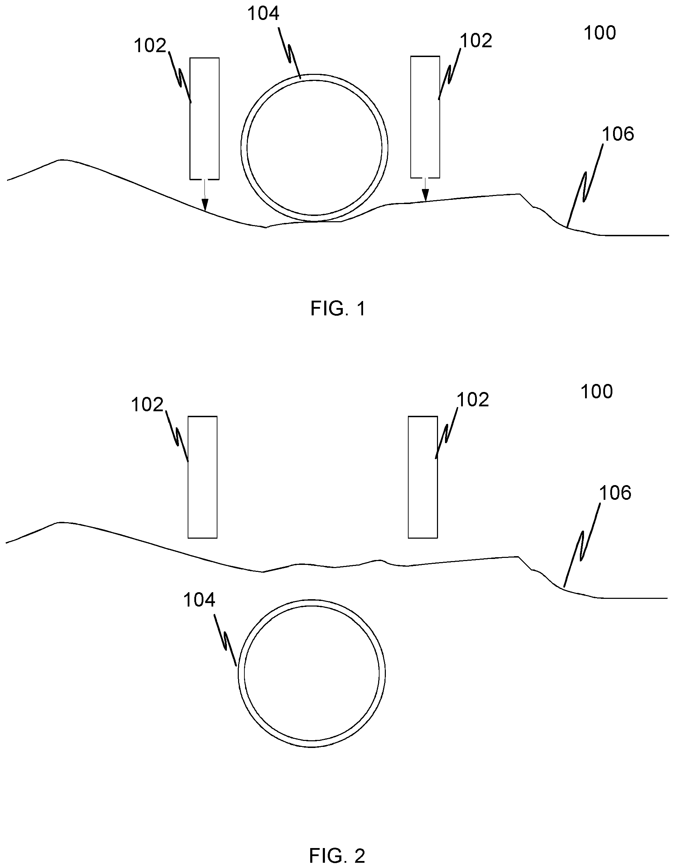

In the exemplary embodiments shown in Figures 1 and 2, the arrangement 100 for burying a pipe in a seabed comprises a pressurized water supply (not shown), at least one nozzle 102 connected to said pressurized water supply, which nozzle is arranged on one side of the pipe to be buried. According to an embodiment of Fig. 1, the arrangement 100 comprises two nozzles 102, which are arranged on opposite sides of the pipe 104 to eject pressurized water jet into the seabed 106 for increasing the water content of the seabed below the pipe, so that the density of the seabed locally decreases below the density of the pipe allowing the pipe to supersede the seabed. The directions of the pressurized water jets are denoted by arrows.

In an embodiment of the present invention, the pressurized water supply is a high-pressure pump configured to utilize surrounded water, such as sea water from the environment wherein the pipe is going to be buried.

In another embodiment, the pressurized water jet is ejected in substantially perpendicular direction into the seabed next to the pipe.

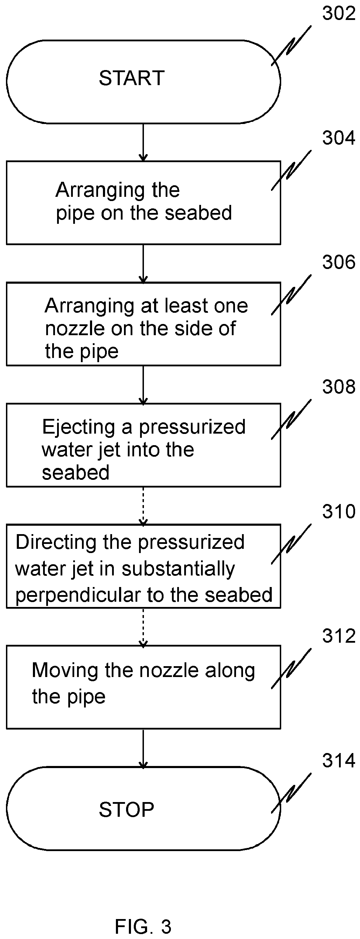

Figure 3 is a flow diagram of an embodiment of a method in accordance with the present invention.

At method start-up 302, preparatory actions may take place, such as arranging the pipe to be buried and the pressurized water supply to the installation site.

At 304, the pipe to be buried is laid on the seabed. Laying the pipe on the seabed can be performed in any known manner.

At 306, at least one nozzle, which connected to the pressurized water supply, is arranged on the side of the pipe. In the embodiment comprising more than one nozzle, the nozzles are advantageously arranged on opposite sides of the pipe. The person skilled in the art will understand, that the nozzles can also be arranged on the opposite sides of the pipe before laying the pipe on the seabed.

At 308, a pressurized water jet is ejected into the seabed with at least one nozzle to increase water content of the seabed below the pipe. The pressure of the water breaks the surface of the seabed, so that the density of the seabed locally decreases below the density of the pipe allowing the pipe to supersede the seabed. Depending on the embodiment, controlling the nozzle(s) can be automated or the nozzle(s) can be controlled by one or more divers.

At 310, ejecting the pressurized water jet into the seabed is continued until the pipe has descended at the desired depth into the seabed.

In an embodiment, the pressurized water jet is directed substantially perpendicular to the seabed.

In an embodiment, the method further comprises a step 312, wherein the nozzle is moved along the pipe. This step takes a place when a part of the pipe or a pipeline is buried. The nozzle is moved to another place along the pipe in order to bury that part of the pipe or the pipeline. The steps 308 and 310 of ejecting the pressurized water jet into the seabed and continuing to eject are followed by the step 312. The steps from 308 to 312 are continued until the whole pipe or desired part of the pipe or the pipeline has been buried in the seabed.

At step 314, the method execution is ended.

A use of the method according to the present invention for burying a pipe in a seabed by increasing water content of the seabed below the pipe, so that the density of the seabed locally decreases below the density of the pipe allowing the pipe to supersede the seabed.

In an embodiment, the use of the method according to the present invention for burying a pipe in a seabed, wherein the seabed is in shallow water.

Consequently, a skilled person may on the basis of this disclosure and general knowledge apply the provided teachings in order to implement the scope of the present invention as defined by the appended claims in each particular use case with necessary modifications, deletions, and additions.

## Claims

1. A method for burying a pipe in a seabed, comprising an arrangement, which comprises at least a pressurized water supply, and at least one nozzle connected to said pressurized water supply, **characterized in that** the method comprises at least the steps of
- arranging the pipe to be buried on the seabed,
- arranging said nozzle on the side of the pipe,
- ejecting pressurized water into the seabed with at least one nozzle to increase water content of the seabed below the pipe, so that the density of the seabed locally decreases below the density of the pipe allowing the pipe to supersede the seabed, and
- ejecting the water until the pipe has descended at the desired depth into the seabed.

2. A method according to claim 2 further comprising a step of moving said nozzle along the pipe for continuing burying the pipe.

3. A method according to of preceding claim, wherein the pressurized water jet is directed in substantially perpendicular to the seabed.

4. A method according to any of preceding claim, wherein said arrangement comprises two nozzles arranged on opposite sides of the pipe.

5. A method according to any of preceding claim, wherein said pressurized water supply is a high-pressure pump.

6. A use of a method according to any of claims 1-5 for burying a pipe in a seabed.

7. A use according to claim 6, wherein the seabed is in shallow water.
